(19) Europäisches Patentamt
European Patent Office
Office européen des brevets

(11) **EP 2 503 342 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(21) Anmeldenummer: **12001970.8**

(22) Anmeldetag: **21.03.2012**

(51) Int Cl.:
**G01P 3/68** *(2006.01)*     **G01S 17/58** *(2006.01)*
**G08G 1/015** *(2006.01)*     **G08G 1/04** *(2006.01)*
**G06M 11/00** *(2006.01)*

(54) **Messsystem mit gepulstem aktiven Einseitenlichtsensor zum Empfang des von einem bewegten Objekt reflektierten gepulsten IR/UV-Lichtes**

Measuring system with a pulsed active single sided light sensor for receiving pulsed IR/UV light reflected form a movable object.

Système de mesure avec un capteur de lumière actif latérale unique pulsé pour recevoir de la lumière IR/UV pulsé réfléchi par un objet mouvementé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2011 DE 102011014747**

(43) Veröffentlichungstag der Anmeldung:
**26.09.2012 Patentblatt 2012/39**

(73) Patentinhaber: **Becker, Joachim**
**07747 Jena (DE)**

(72) Erfinder: **Becker, Joachim**
**07747 Jena (DE)**

(74) Vertreter: **Dreykorn-Lindner, Werner**
**Patentanwalt**
**Steinlachstrasse 2**
**90571 Schwaig (DE)**

(56) Entgegenhaltungen:
**AT-B- 405 107          DE-A1- 19 947 023**
**US-A- 5 521 696          US-A1- 2004 118 624**
**US-A1- 2006 060 761     US-A1- 2008 239 325**

**Beschreibung**

Die Erfindung betrifft ein Messsystem gemäß dem Oberbegriff des Patentanspruchs 1.

Mobile Messsysteme zur Geschwindigkeitskontrolle sind seit langem bekannt. Die Messung am jeweiligen Straßenrand erfolgt entweder per Laser, Radar oder auch Lichtschranke. Überschreitet dieses einen vorher definierten Grenzwert, wird die Kamera und das dazugehörige Blitzgerät ausgelöst und ein Foto des Fahrzeugsführers aufgenommen. In einigen Fällen werden Kfz-Kennzeichen und gemessene Geschwindigkeit per Funk an einen Polizeibeamten übermittelt, welcher das Fahrzeug hinter der Messstelle zur Feststellung der Personalien des Fahrers anhält. Das Messgerät selbst ist dabei normalerweise so aufgestellt, dass es nicht oder erst aus kurzer Entfernung sichtbar wird, beispielsweise im Heck eines geparkten PKW platziert, und so keine Möglichkeit zum rechtzeitigen Abbremsen besteht.

Von allen Abstands- oder Geschwindigkeitsmesssystemen (Radar, Piezoschläuche, Induktionsschleifen, Ultraschall und Licht) sind die lichtbasierten Messsysteme die zurzeit Genauesten und auch in der Handhabung die Einfachsten. Passive Fotosensoren können durch Störlicht von wendenden Autos oder Sonnenlichtreflexe einer betätigten Fensterscheibe zu falschen Ergebnissen kommen. Insbesondere können passive optische Sensoren zur Geschwindigkeitsmessung an Ampelkreuzungen nicht eingesetzt werden, da durch abbiegende Autos das zur Messung notwendige Tages- oder Straßenbeleuchtungslicht durch Fahrzeugscheinwerfer überstrahlt wird. Der personelle und materielle Aufwand zur Rotlicht-Ampelüberwachung ist, bei relativ geringer Anzahl von Verstößen am Tag, sehr hoch und deshalb wird ein gleichzeitiges Ermitteln der Geschwindigkeitsverstöße gewünscht. Mit einem ausschließlich zeitbasierten Messsystem müssen zur Geschwindigkeitsmessung zwei Messmarken im Abstand von 50 m auf der Fahrbahn vorhanden sein. Diese Messmarken anzubringen und die Kameras so zu positionieren, dass die Ampel und die Messmarken im Video gleichzeitig gesehen werden, ist durch die örtlichen Gegebenheiten und durch parkende Autos in der Praxis mit vernünftigem Aufwand nicht zu realisieren.

Beispielsweise ist von der Firma eso GmbH eine sogenannte Drillingslichtschranke auf Lichtschrankenbasis mit Datenübertragung zwischen Rechner und Kamera per Funk bekannt. Das zu messende Fahrzeug fährt durch die Lichtstrahlen der Infrarot-Drillingslichtschranke, die also im rechten Winkel zum Fahrbahnverlauf der Straße steht, hindurch, wobei auf der einen Seite der Straße drei Leistungs-Infrarotstrahler (Wellenlänge 930 nm) und genau gegenüber auf der anderen Seite ein 3-fach Lichtempfänger mit den fotoelektrischen Schaltungen steht. Am mittleren rohrförmigen Infrarotstrahler ist eine Halterung für ein Zielfernrohr sowie eine Wasserwaage oder eine Neigungs-Wasserwaage montiert, um die exakte Ausrichtung von Infrarotstrahler und Lichtempfänger zu gewährleisten. Im Unterteil des Lichtempfängers ist der Rechner des Drillingslichtschranke sowie ein Datenfunksender untergebracht, welcher den errechneten Geschwindigkeits-Messwert sowie Verkehrsrichtung, Fotoauslösebefehl und Geräte-Identifizierungs-Code an die Fotoanlage sendet. Im Deckel des Lichtempfängers befinden sich zur Anzeige, ob Infrarotstrahler und -empfänger genau aufeinander einjustiert sind, drei Leuchtdioden. Bei der Einfahrt des Fahrzeuges mit der Vorderfront in den Lichtstrahlenbereich werden zwei Messwerte gebildet, nämlich zwischen den Lichtstrahlen 1 + 2 und den Lichtstrahlen 1 + 3 der Drillingslichtschranke. Liegen die beiden Messwerte innerhalb des Toleranzbereichs/einem zuvor eingestellten Grenzwert, wird dieser vom Rechner über den Datenfunksender zur Fotoeinrichtung der Drillingslichtschranke weitergeleitet. Danach wird in gleicher Weise wie die Einfahrtsmessung die Ausfahrtsmessung durchgeführt jedoch mit dem Unterschied, dass bei der Einfahrt das Unterbrechen der Lichtstrahlen, bei der Ausfahrt das Freischalten der bis dahin durch das Fahrzeug unterbrochenen Lichtstrahlen (Heck des Fahrzeuges) zur Zeitmessung herangezogen wird. Unter der Voraussetzung, dass auch die beiden Werte der Ausfahrtsmessung innerhalb der Toleranzgrenze liegen, wird nun noch ein Toleranzvergleich zwischen der Einfahrts- und der Ausfahrtsmessung durchgeführt und danach wird aus allen bis zu diesem Zeitpunkt getätigten Messwertvergleichen der niedrigste Messwert ermittelt. Nachdem zuvor (nach Abschluss der Frontmessung) nur der Fotoauslösebefehl übertragen wurde, wird jetzt auch der das so ermittelte Messergebnis als Geschwindigkeitsmesswert übertragen und in das Foto nachträglich eingeblendet.

Weiterhin ist von der Firma eso GmbH eine als Einseitensensor bezeichnete Geschwindigkeitsmessanlage auf Basis der Abtastung des Helligkeitsprofils bekannt, welche aus einem Sensorkopf auf Stativ, einer Rechnereinheit mit Messkarte, einem berührungsempfindlichen Bildschirm, einer digitalen Fotoeinrichtung sowie entsprechendem Zubehör besteht. Der Sensorkopf weist fünf optische Helligkeitssensoren, wobei die Lichtstrahlen von drei der Sensoren rechtwinklig zur Fahrbahnrichtung verlaufen, der vierte und fünfte dagegen schräg versetzt ist. Die Sensorebene mit allen fünf Sensoren ist in der Regel parallel zur Fahrbahn ausgerichtet, wobei eine sogenannte Vierfach-Messung durchgeführt wird und wobei das Messprinzip auf einer "Weg - Zeitmessung" beruht. Die Geschwindigkeit eines Fahrzeuges ergibt sich dabei aus der Messstrecke und der Zeit, in der das zu messende Fahrzeug die Messstrecke durchfährt. Bei der Durchfahrt wird in jedem der fünf Sensoren ein Helligkeitsprofil des gemessenen Fahrzeugs erfasst, digitalisiert und gespeichert. Aus den abgetasteten Helligkeitsprofilen der drei parallelen Sensoren wird der zeitliche Versatz ermittelt, um dann daraus die Geschwindigkeit zu errechnen. Zur Verbesserung der Ausleuchtung des Fotobereichs, insbesondere bei Dunkelheit, wird eine Blitzeinheit verwendet. Der Einseitensensor kann auch mit einer zusätzlichen Fotoeinrichtung (ggf. mit einer weiteren Blitzeinheit) betrieben werden. Damit kann eine Geschwindigkeitskontrolle mit Frontfotodokumentation zur Fahreridentifikation entweder gleichzeitig in beide Fahrtrichtungen (zu- und abfließend) oder für mehrere Spuren durchgeführt werden. Die Einzelmesswerte, die gleich oder größer als ein vorgewählter Geschwindigkeitsgrenzwert sind, bleiben im Rechner gespeichert und können per tragbaren Speicher (beispielsweise USB-Stick) auf einen anderen Rechner übertragen werden. Die Speicherung erfolgt dabei automatisch bei Messende. Der Einseitensensor ist für jeden Verkehrsraum geeignet z.B. in 30er Zonen, auf kurvenreichen Strecken, auf vierspurigen Autobahnen, auf Landstraßen, etc. Durch gleichzeitiges Auslösen der Front- und Heckkamera können Motorradfahrer beweissicher dokumentiert werden.

Auch ist aus der DE 22 09 732 C2 eine Anordnung zur Geschwindigkeits-messung mit zwei am Anfang und Ende einer Messstrecke angeordneten Doppel-Schaltschranken, welche den Eintritt des Objektes in die Messstrecke und den Austritt aus der Messstrecke unter Beteiligung je eines Erstsignals und eines Zweitsignals zeitlich erfasst, bekannt. Um sicherzustellen, dass die Messung durch den übrigen Verkehr unbeeinflusst bleibt, legen die Erstsignale bestimmte Überwachungsintervalle fest und die Zweitsignale markieren den Beginn bzw. das Ende des Messintervalls unter der Bedingung, dass diese Zweitsignale in die durch ihre zugehörigen Erstsignale festgelegten Überwachungsintervalle fallen. Die durch das Überfahren der Schaltschranke getriggerten Signale können also nicht in jedem Fall das Zähltor öffnen bzw. schließen sondern nur unter einer ganz bestimmten Bedingung. Die Bedingung besteht darin, dass das getriggerte Signal, nämlich das Zweitsignal, in einem ganz bestimmten durch Anfang und Ende definierten Zeitraum, dem sogenannten Überwachungsintervall, liegen muss. Im Einzelnen wird vorgeschlagen, dass die Doppel-Schaltschranken je aus zwei Einzelschranken bestehen, deren Abstand nur einen kleinen Bruchteil der Messstrecke beträgt, und dass die von dem Objekt zuerst zu passierende Einzelschranke jeder Doppelschranke das Erstsignal und die andere Einzelschranke das Zweitsignal abgibt. Die Doppel-Schaltschranken sind zwei Sender/Empfänger, deren Sender gleichzeitig mit der Abgabe von Erstsignalen laufend impulsförmige scharf gebündelte Strahlen quer zur Bahn des bewegten Objektes aussenden, welche zur Reflexion an dem Objekt bestimmt sind und in diesem Fall vom zugehörigen Empfänger empfangen und als Zweitsignal weitergegeben werden. Dabei werden Strahlen, die auf gar kein Fahrzeug auftreffen, nicht reflektiert und lassen damit kein Zweitsignal entstehen. Weiterhin kann das Geschwindigkeitsmessgerät auch aus zwei Laserstrahlern und zwei Empfängern für reflektierte Laserstrahlen bestehen. Die Empfänger sind rechts in kurzem Abstand neben den Strahlern angeordnet und die Sender sind in einer Höhe angeordnet, in der möglichst vertikale Flächen der Fahrzeuge getroffen werden. Beim Erscheinen des Fahrzeuges an der Schranke tritt nun eine ständige Folge von Erstimpulsen oder Sendeimpulsen auf, was auch eine laufende Folge von Überwachungsintervallen entspricht. Solange kein Fahrzeug sich in der Messstrecke befindet, werden die Erstimpulse nicht reflektiert, es treten überhaupt keine Zweitimpulse auf. Sobald ein Fahrzeug in die Bahn des impulsförmigen Strahles des Strahlers kommt, wird der nächstfolgende Impuls reflektiert. Er erreicht den Empfänger und erzeugt den ersten Zweitimpuls. Dieser erst auftretende Zweitimpuls, sofern er in das durch ein einstellbares Zeitverzögerungsglied und ein Monoflop definiertes Überwachungsintervall fällt, wird als Zweitimpuls wirksam und öffnet ein Zähltor. Auch alle folgenden Zweitimpulse, die durch fortgesetzte Reflexion an dem vorbeifahrenden Fahrzeug entstehen, fallen mitten in die Überwachungsintervalle. Wenn das Fahrzeug den zweiten Sender erreicht, entstehen auch hier Zweitimpulse, welche das Zähltor schließen. Die Auszählung und Berechnung der Geschwindigkeit verläuft, anhand der abgespeicherten Zählimpulse, d. h. der Zeit, die das Fahrzeug zum Durchfahren der Messstrecke brauchte.

Weiterhin ist aus der DE 40 41 149 C1 ein Verfahren zum Erfassen und Erkennen von unterschiedlichen Fahrzeugarten im fließenden Verkehr, insbesondere von Kraftfahrzeugen im Straßenverkehr, bekannt. Um eine sehr genaue Klassifizierung der die Messstelle passierenden Fahrzeuge zu ermöglichen, wobei einerseits die Störanfälligkeit möglichst gering gehalten werden soll und andererseits das parallele Erfassen von Fahrzeugen auf mehrspurigen Fahrbahnen ermöglicht werden soll, wird je durchfahrendem Fahrzeug eine Vielzahl von aufeinander folgenden Messungen vorgenommen und durch Vergleich der sich aus der Vielzahl von Messungen ergebenden Fahrzeugsilhouette mit gespeicherten Mustersilhouetten die Fahrzeugart bestimmt. Durch das Anordnen eines Abstandsdetektors, beispielsweise eines Ultraschall-Sendeempfänger, oberhalb einer Fahrbahn wird jedes Fahrzeug auch auf mehrspurigen Fahrbahnen sicher einzeln erfasst. Durch die Vielzahl von aufeinander folgenden Messungen während des Passierens eines Fahrzeuges wird von diesem Fahrzeug eine Abbildung erzeugt, die der Silhouette des Fahrzeuges entspricht, indem an dem Fahrzeug in kurzen Abständen eine Höhenmessung vorgenommen wird. Diese Höhe ergibt sich aus der Differenz des zwischen Fahrzeug und Detektor gemessenen Abstandes und des Abstandes zwischen Detektor und Fahrbahn. Dieser Abstand wird durch jedes Fahrzeug und insbesondere jede Fahrzeugart charakteristisch verkürzt. Die Fahrzeugsilhouette wird rechnerisch approximativ in Rechtecke längs der Zeitachse zerlegt, deren Höhe dem Durchschnittswert der aufeinander folgenden Abstandsmessungen entspricht, wobei jeweils ein neues Rechteck begonnen wird, sobald die Differenz zweier aufeinander folgender Abstandswerte einen bestimmten Betrag überschreitet. Die Fahrzeugart wird aufgrund der Anzahl dieser so erzeugten Rechtecke und dem Verhältnis der Rechtecke zueinander bestimmt, indem durch Vergleich der durch diese Messung festgestellten Silhouette mit gespeicherten Mustersilhouetten die Fahrzeugart bestimmt wird. Auch die Anzahl der in jeder Fahrzeugart festgestellten Fahrzeuge kann aufsummiert, die Summe gespeichert und die festgestellte Fahrzeugart zur Steuerung einer fahrzeugartabhängigen Einrichtung verwendet werden.

Optische Überwachungseinrichtungen werden auch in anderen technischen Gebieten benutzt.

Beispielsweise ist aus der DE 297 00 253 U1 eine Überwachungseinrichtung zum Erkennen von Stoffen mit fluoreszierenden Substanzen auf Oberflächen von Flüssigkeiten oder Festkörpern bekannt, welche eine Lichtquelle und Empfänger für von einer fluoreszierenden Substanz reflektiertes, von der Lichtquelle ausgesandtes Licht aufweist. Fluoreszenz tritt bei zahlreichen organischen und anorganischen, im Wasser gelösten Stoffen beziehungsweise Flüssigkeiten auf. Beispielsweise sind dies Schmieröle, Petroleum, Benzin, organische Farbstoffe, Milchsäure, Glyzerin, Dextrose, Zellulose, optische Aufheller in Waschmitteln, Chlorophyll, Chinin, Flussspat und dergleichen. Im Einzelnen ist vorgesehen, dass die Lichtquelle wenigstens eine im blauen Lichtbereich abstrahlende und mit ihrer Abstrahlseite direkt der zu überwachenden Oberfläche zugewandte Leuchtdiode ist und dass vor dem Empfänger ein Farbfilter mit einem Wellenlängen-Durchlassbereich oberhalb der abgestrahlten Wellenlänge angeordnet ist. Die Lichtquelle selbst ist sehr klein und es sind keinerlei Abschirm- und Bündelungsmaßnahmen mehr erforderlich, was ebenfalls den Platzbedarf erheblich reduziert und was auch die Verluste klein hält. So tritt bei dieser punktförmig abstrahlenden Lichtquelle praktisch kein Streulicht auf und das von der Lichtquelle abgestrahlte Licht steht praktisch vollständig direkt als gebündelter Lichtstrahl zur Verfügung. Die Leuchtdiode kann bedarfsweise auch mit einer sehr hohen Modulationsfrequenz gepulst betrieben werden. Daraus resultiert, dass auch sehr schnelle Bewegungsabläufe erfassbar sind. Außerdem wird dadurch auch eine hohe Störsicherheit gegenüber Fremdlicht erreicht. Hierzu ist ein Pulsgenerator vorgesehen mit welchem eine Sendedioden-Ansteuerung, eine Sample and Hold-Schaltung sowie eine Auswertestufe verbunden sind. Sender und Empfänger können bezüglich der Anzahl und der Anordnung in unterschiedlichsten Konstellationen angeordnet sein. Je nach dem zu überwachenden Bereich kann also eine Reihe von Sender-Leuchtdioden nebeneinander angeordnet sein und mit einem Empfänger zusammenarbeiten. Es besteht aber auch die Möglichkeit, jeweils einer oder einer Gruppe von Leuchtdioden einen Empfänger zuzuordnen. Dies ist dann sinnvoll, wenn große Flächen zu überwachen sind. Es besteht dabei auch die Möglichkeit, die Sende-LEDs um einen Empfänger herum anzuordnen. Auch hier kann bei dem Empfänger eine Sammellinse angeordnet sein.

Schließlich ist aus der DE 202 06 926 U1 ein Überwachungssystem mit einer Lichtschranke zur optoelektronischen Kontrolle, ob Personen oder Gegenstände in Gefahrenbereiche von Bahnhöfen eindringen oder eingedrungen sind, bekannt. Die Lichtschranke ist von einem Lichtgitter gebildet, bestehend aus einer ein Lichtgitter erzeugenden ersten Mehrfachanordnung von Lumineszenz bzw. Leuchtdioden (LED) und einer im Überwachungsabstand dazu angeordneten, die emittierten Lichtstrahlen delektierenden zweiten Mehrfachanordnung von Fotosensoren. Die Fotosensoren sind zu einer Sensorkette zusammengeschaltet sowie an eine Auswerteschaltung angeschlossen. Die Auswerteschaltung veranlasst im Falle eines normalen Lichtgitterprofils die Abgabe eines Ab- oder Einfahrtssignals oder - bei automatischen Fahrsystemen - eine Freigabe des Zuges bzw. verhindert im Falle eines Störprofils die Ab- oder Einfahrt des Zuges, solange die Störung besteht. Im Einzelnen sind im Infrarotbereich arbeitende Leuchtdioden und auf diesen Wellenbereich abgestimmte Fotosensoren (weil unsichtbar und weniger staubempfindlich) vorgesehen, wobei die Leuchtdioden getaktet bzw. frequenzmoduliert sind und die Abtastung der Fotosensoren synchron zur Frequenzmodulation gesteuert ist (Verlängerung der Betriebsdauer und energiesparend). Eine weitere bevorzugte Anordnung besteht darin, dass die erste Mehrfachanordnung und die zweite Mehrfachanordnung jeweils in Flucht und im Abstand zueinander in Reihen angeordnete Leuchtdioden bzw. Fotosensoren aufweisen, wobei je ein Fotosensor zum Empfang der Lichtstrahlen von mindestens je einer zugeordneten gegenüberliegenden Leuchtdiode eingerichtet ist. Als Fotosensoren bzw. Fotodetektoren können Fotowiderstände, Fotoelemente oder Fotodioden benutzt werden. Zur Analyse des Zeitverhaltens und damit einer genaueren Erfassung und Klassifikation der Personen und Gegenstände sind mindestens zwei Lichtgitter mit Abstand übereinander, d.h. in zwei Ebenen, erforderlich.

Weiterhin betrifft die US 5, 521696 A eine in der Hand gehaltene Laserpistole mit einem Laser-Entfernungsmesser, einem Mikrocontroller, einem handbetätigten Auslöser und einem Zielfernrohr für einen Benutzer, um visuell ein Ziel auswählen und um den Betrieb der Vorrichtung in steter Ausrichtung auf das ausgewählte Ziel auszulösen. Das ausgewählte Ziel fährt also auf die Laserpistole zu und die Geschwindigkeitsmessung erfolgt nach Maßgabe der Laufzeiten. Im Einzelnen weist der Laser-Entfernungsmesser eine selbstkalibrierende Interpolationsschaltung und ein digitales Logik-Gatter auf, mit welchem sowohl das "Öffnung" und "Schließen" des Gatters von dem Mikrocontroller selektiv eingestellt werden kann. Durch den Mikrocontroller gesteuert, sendet der Laser-Entfernungsmesser in bekannten Zeitabständen eine Serie von Laserimpulsen auf ein gewähltes entferntes Ziels und erfasst das reflektierte Laserlicht von jedem Impuls. Der Mikrocontroller berechnet dann die Geschwindigkeit des Ziels auf die in der Hand gehaltene Laserpistole aus der Änderung der Entfernung zum Ziel durch die bekannte verstrichene Zeit zwischen dem Senden der Impulse. Dabei sind zur genauen Bestimmung der Geschwindigkeit, abhängig von der gewünschten Genauigkeit, zwanzig bis 150 Impulse im Allgemeinen ausreichend.

Weiterhin betrifft die US 2006/060761 A1 eine Vorrichtung zur Fernerfassung von Objekten zur Aufklärung für militärische Zwecke. Die Vorrichtung ist auf einem Flugkörper oder einem Satelliten in einem Radom installiert, sendet ein gepulstes Lasersignal aus und das reflektierte Lasersignal wird ausgewertet. Zur Vermeidung von Dopplereffekten sind Fresnel-Linsen, Bandpassfilter und bei einer Ausführungsform eine nicht weiter beschriebene Lichtsperre aus einer Vielzahl von koaxialen Hohlzylindern (ähnlich wie ein Strohhalm) vorgesehen, welche das reflektierte Lasersignal sammeln.

Weiterhin betrifft die AT 405 107 B eine opto-elektronische Geschwindigkeitsmesseinrichtung, insbesondere zur Verkehrskontrolle mit einer Sendeeinrichtung zum Aussenden einer Folge von Laser-Impulsen und einer Empfangseinrichtung, die von im Strahlengang der Sendeeinrichtung befindlichen Zielen reflektierte Signale empfängt. Ferner sind eine Signalverarbeitungsstufe, in welcher diese Signale verstärkt, eventuell umgeformt und digitalisiert werden und ein Prozessor vorgesehen, welcher aus den Echosignalen in Verbindung mit Startimpulsen Entfernungswerte ermittelt und schließlich aus zu mindestens zwei Entfernungswerten und den zugehörigen Messzeitpunkten die Geschwindigkeit des im Strahlengang befindlichen Zieles berechnet. Um Abweichungen der Clockgeneratoren als Folge von Temperatur- und/oder Spannungsänderungen zu vermeiden, ist eine einziger Taktgebervorgesehen, von dessen Zeitnormal sowohl die Berechnung der verschiedenen Entfernungswerte aus der Impulslaufzeit der Impulse einer Impulsfolge abgeleitet ist, als auch die Messzeitpunkte definiert werden, so dass bei der Berechnung der Zielgeschwindigkeit aus mindestens zwei Entfernungswerten und den zugehörigen Messzeitpunkten der ermittelte Geschwindigkeitswert von Abweichungen der Taktfrequenz von einer Sollfrequenz unabhängig ist. Der Geschwindigkeitsmesser ist als Handgerät ausgebildet, enthält eine Visiereinrichtung, um das Gerät auf ein Ziel ausrichten zu können und das ausgewählte Ziel fährt also auf das Handgerät zu und die Geschwindigkeitsmessung erfolgt nach Maßgabe der Laufzeiten.

Schließlich ist aus der US 2008/0239325 A1 eine Vorrichtung zur Objektdetektion für industrielle Zwecke unter Verwendung von gepulsten Laser- oder LED-Licht und Auswertung des reflektierten Lichts bekannt.

Wie die vorstehende Würdigung des Standes der Technik aufzeigt, werden optische Module auf verschiedenen technischen Gebieten eingesetzt. Durch die dabei benutzten Verfahren kann ein bewegtes Objekt zwar identifiziert werden, Lichtreflexe oder Dämpfungen von Fremdlicht können jedoch zu Fehlinterpretationen und fehlerhaften Messwerten führen. Der Gedanke gepulstes Licht als Informationsträger zu nutzen ist schon alt. In der Praxis hat sich bisher kein brauchbares Prinzip bestätigt. Die Sonne hat im sichtbaren, UV- und IR-Spektralbereich eine mehrere 1000-fach höhere Lichtleistung als die Sendeleistung von derzeitigen Lichtquellen. Es fehlt jedoch ein Messsystem mit einer Verstärkung des Nutzlichtes gegenüber Fremdlicht bei einem gepulsten aktiven Einseitensensor mit unsichtbarem IR- oder UV-Licht. Besonders bedeutsam ist dies, weil die Industrie auf dem technischen Gebiet der industriellen Elektronik als fortschrittliche, entwicklungsfreudige Industrie anzusehen ist, die schnell Verbesserungen und Vereinfachungen aufgreift und in die Tat umsetzt.

Der Erfindung liegt die Aufgabe zugrunde, ein Messsystem mit mindestens einem gepulsten Einseitenlichtsensor derart zu gestalten, dass sich ein signifikant erhöhtes Verhältnis von Nutz- zu Störsignal bei Fremdlichteinfluss ergibt.

Diese Aufgabe wird, gemäß kennzeichnenden Teil des Patentanspruchs 1 dadurch gelöst, dass zur Geschwindigkeitsmessung des sich bewegenden Objekts, der Einseitenlichtsensor mindestens drei IR- oder UV-Empfänger und zwei abwechselnd dazwischen angeordnete IR- oder UV-Sender aufweist, dass am Anfang der Messstrecke des Einseitenlichtsensors ein IR- oder UV-Empfänger und im Abstand in Bewegungsrichtung des Objekts hierzu der IR- oder UV-Senderparallel zur Bezugsebene oder zur Fahrbahn angeordnet ist, dass die IR- oder UV-Sender mit einem Impulsgenerator in Verbindung stehen, der so angeordnet ist, dass er periodische Impulse zusätzlich getaktet in eine An- und Ausphase sendet, wobei die Ausphase ein zeitliches Vielfaches der Anphase beträgt, dass mit jedem IR- oder UV-Empfänger ein Verstärker und eine Auswerteschaltung, die so angeordnet ist, dass sie das gepulste und getaktete Nutzlichtsignal unter Selektion der Impulsmuster, des Verhältnisses der Impulssendefolge und Austastzeit und einer Erhöhung oder Reduzierung der Amplitude des Nutzsignals auswertet, verbunden sind und dass zur Abschwächung von Fremdlicht der IR- oder UV-Empfänger am Ende innerhalb einer Röhre angebracht ist und die Röhre mit einer Längenerstreckung von mehr als 5 -fachen des inneren Röhrendurchmessers und im optisch relevanten Innenbereich mit einer rauen oder matten Oberfläche ausgestaltet ist.

Beim erfindungsgemäßen Messsystem ergibt sich durch den mechanischen Aufbau und die Anordnung von Lichtfiltern vor den Sensoren in Verbindung mit einem getakteten und zusätzlich gepulsten Lichtstrahl ein signifikant erhöhtes Verhältnis von Nutz- zu Störsignal bei Fremdlichteinfluss. Dabei wird beim erfindungsgemäßen aktiven Einseitensensor das gepulste und getaktete Nutzlicht von der gleichen Seite ausgestrahlt, auf dem sich auch der Lichtsensor befindet. Im Vergleich zu dem Funktionsprinzip bei herkömmlichen Lichtschranken, besteht beim erfindungsgemäßen aktiven Einseitensensor das Risiko darin, dass hier in einem vielfach geringeren Umfang gepulstes Licht am Empfänger ankommt, als bei einer aktiven Lichtschranke, die auf einer Seite der Messstrecke eine gepulste Lichtquelle und auf der anderen Seite einen Lichtempfänger hat. Das gepulste IR- oder UV-Licht an der Empfangsdiode wird an sich durch Fremdlicht (Störlicht) stark beeinflusst, da dieses das Nutzsignal durch die Störsignale (Graues Rauschen in verschiedenen Spektralbereichen) überlagert. Durch den Einsatz von getaktetem Nutzlicht mit Ausphase und Abschwächung der Lichtsignale, einschließlich Verwendung einer dünnen Aufnahmebohrung oder Röhre vor dem Lichtempfänger kann beim erfindungsgemäßen Messsystem auf überraschend einfache Art und Weise ein bewegtes Objekt eindeutig identifiziert werden, wobei Lichtreflexe oder Dämpfungen von Fremdlicht nicht zu Fehlinterpretationen und fehlerhaften Messwerten führen können. Dabei wird im Gegensatz zu den bisherigen am Markt befindlichen Messsystemen, welche primär die verschiedenen Lichtsignale durch optische Linsensysteme verstärken, beim erfindungsgemäßen Einseitensensor das ankommende Licht durch die Bohrung oder Röhre signifikant abgeschwächt, um es gegebenenfalls mit einem höheren Nutzsignalanteil wieder elektronisch zu verstärken.

Weiterhin weist der erfindungsgemäße aktive Einseitensensor den Vorteil auf, dass das Störlicht, welches seitlich in die Röhre einfällt, weitestgehend eliminiert wird. Das gerade einfallende (parallel zur Röhrenmittenachse) Nutzlicht wird hingegen nicht bzw. vernachlässigbar beeinflusst.

Auf einem anderem, fernliegendem Gebiet der Technik, nämlich Tintenstrahldrucker, ist aus der US 6 172 690 B1 ein optisches Sensormodul zum Erfassen von Eigenschaften eines auf einem Druckmedium gedruckten Bildes im Tintenstrahldrucker bekannt, welches an einem sich hin- und her bewegenden Druckkopf angebracht ist und eine lichtemittierende Diode aufweist, die einen ausgewählten Bereich des Druckmediums beleuchtet. Um Fremdlicht, wie etwa Sonnenlicht oder die Strahlung von Tischlampen oder dergleichen, zu unterdrücken und um die Funktion des Sensors zur Papiererkennung oder zur Druckkopfjustage nicht zu beeinträchtigen, wird vorgeschlagen, die Wand des Lichtaufnahmekanals, an dessen Ende die Photozelle des optischen Detektors angeordnet ist, geeignet auszugestalten. Hierzu ist eine Röhre vorgesehen, welche zur Erhöhung der Absorption aus schwarzem Kunststoff mit einer mattierten inneren Oberfläche gebildet wird. Zusätzlich ist die innere Wand des Lichtaufnahmekanals mit einer Vielzahl von Vorsprüngen, insbesondere in Form von spiralenförmigen Rippen oder in Form eines Gewindes versehen, welche das nicht genau senkrecht zur reflektierenden Fläche des Druckmediums propagierende Streulicht vor der Photozelle wegreflektieren sollen.

Das erfindungsgemäße Verfahren kann z.B. zur Objektzählung, Längenmessung, Überprüfung von Sicherheitssperrbereichen oder zur Geschwindigkeitsmessung unter Tageslichteinfluss genutzt werden.

Bei einer bevorzugten Ausgestaltung der Erfindung weist, gemäß Patentanspruch 2-jede Röhre des IR- oder UV-Empfängers einen auf der Fronseite angeordneten Tageslichtsperrfilter auf.

Die weitere Ausgestaltung der Erfindung weist den Vorteil auf, dass durch den Einsatz von IR- oder UV-Sperrfiltern eine Blockierung des sichtbaren Lichtes - Durchlass ab einer Wellenlänge oberhalb von ca. 880 nm oder unterhalb von ca. 350 nm - erfolgt.

Vorzugsweise ist, gemäß Patentanspruch 3, der Einseitenlichtsensor als Messbalken ausgestaltet und weist zum Ausrichten des Messbalkens mindestens zwei weitere im Abstand zueinander angeordnete Laser-Sender/- Pointer (3.1, 3.2) auf.

Durch den Einsatz von zwei Laserpointern kann das Ausrichten des Einseitenlichtsensor/Messbalkens parallel zur Bezugsebene/Fahrbahn die Erkennung der Nutzsignale erleichtern, da die IR/UV-Empfänger/Lichtsensoren das Licht von denselben Objekt- oder Fahrzeugteilen aus der gleichen Höhe erhalten.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:

FIG. 1	eine Ausführungsform des erfindungsgemäßen Meßsystems zur Geschwindigkeitsmessung mit Abstands- und Fahrzeuglängendetektion,

FIG. 2	die Signalverläufe über die Zeit eines getakteten und gepulsten Einseitenlichtsensors nach **FIG. 1**,

FIG. 3	eine Ausfiihrungsform des erfindungsgemäßen Meßsystems zur Objektanwesenheitserkennung mit Objektlängendetektion,

FIG. 4	eine Ausführungsform eines IR/UV-Empfangers gemäß der Erfindung,

FIG. 5	eine Ausführungsform eines Einseitenlichtsensors mit 3 Lichtempfängern gemäß der Erfindung,

FIG. 6	die Signalverläufe der Impulsreflektionen über die Zeit einer Ausführungsform eines Einseitenlichtsensors mit drei IR/UV-Empfangern gemäß der Erfindung,

FIG.7	eine Ausführungsform eines aktiven Einseitensensors mit vier Lichtempfängern mit Schieler zur zusätzlichen Fahrbahndetektion und

FIG.8	eine Ausführungsform des erfindungsgemäßen Meßsystems nach **FIG.1** mit zusätzlicher Fahrbahndetektion gemäß der Erfindung.

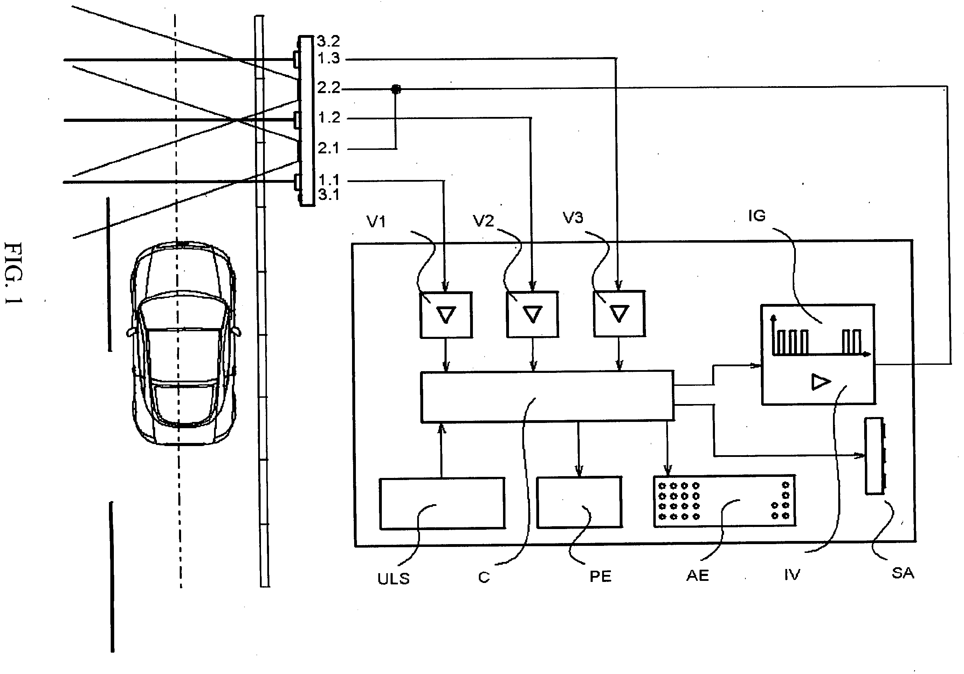

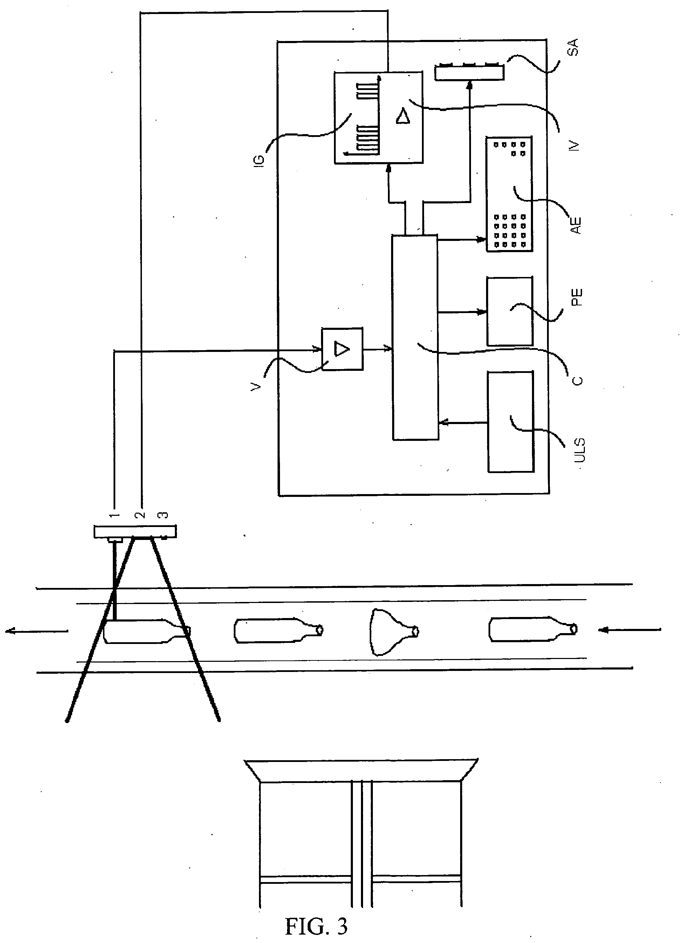

Beim aktiven Einseitensensor ES in der Ausführungsform eines Messbalkens gemäß **FIG. 1** und **FIG. 3** wird ein gepulstes und getaktetes Nutzlicht von der gleichen Seite ausgestrahlt (siehe Lichtquelle/IR/UV-Sender 2.1 und 2.2 in **FIG. 1**), auf der sich auch ein Lichtsensor, insbesondere ein IR/UV-Empfänger 1.1, 1.2, 1.3 befindet.

Wie **FIG. 1** und **FIG. 3** aufzeigen, kann das erfindungsgemäße Verfahren z.B. zur Objektzählung, Längenmessung, Überprüfung von Sicherheitssperrbereichen oder zur Geschwindigkeitsmessung unter Tageslichteinfluss genutzt werden.

Im Gegensatz zu dem Funktionsprinzip bei herkömmlichen Lichtschranken, besteht bei einem Einseitensensor das Risiko darin, dass hier in einem vielfach geringeren Umfang gepulstes Licht am Empfänger ankommt, als bei einer aktiven Lichtschranke, die auf einer Seite der Messstrecke eine gepulste Lichtquelle und auf der anderen Seite einen Lichtempfänger hat. Insbesondere wird das gepulste IR- oder UV-Licht an der Empfangsdiode durch Fremdlicht (Störlicht) stark beeinflusst, da dieses das Nutzsignal durch die Störsignale (Graues Rauschen in verschiedenen Spektralbereichen) überlagert.

Durch die Kombination der verschiedenen Mittel beim erfindungsgemäßen Verfahren/Einseitensensor ES können die negativen Einflüsse weitestgehend minimieren bzw. im Idealfall komplett unterdrücken und es kann ein bewegtes Objekt eindeutig identifiziert werden, wobei Lichtreflexe oder Dämpfungen von Fremdlicht nicht zu Fehlinterpretationen und fehlerhaften Messwerten führen können.

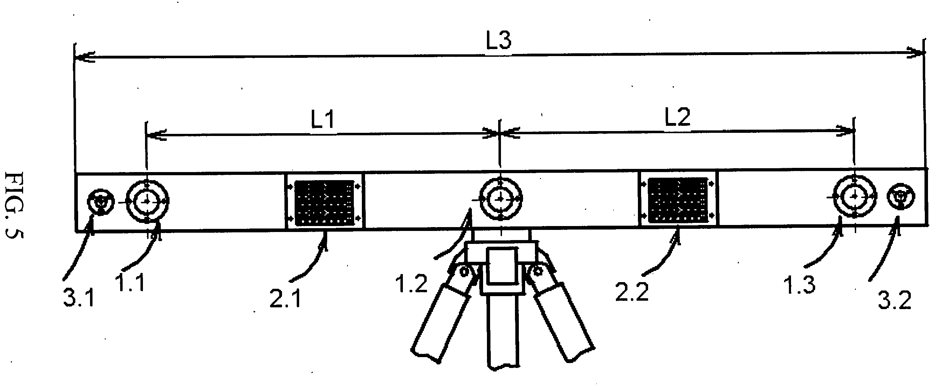

Am Anfang der Messtrecke des erfindungsgemäßen Einseitenlichtsensors ES ist im auf einem Stativ S (Dreibeinstativ) stehenden Messbalken (siehe **FIG. 5**) ein Sensor, insbesondere ein IR/UV-Empfanger 1.1 und im Abstand hierzu eine Lichtquelle, insbesondere IR/UV-Sender 2.1, angeordnet ist.

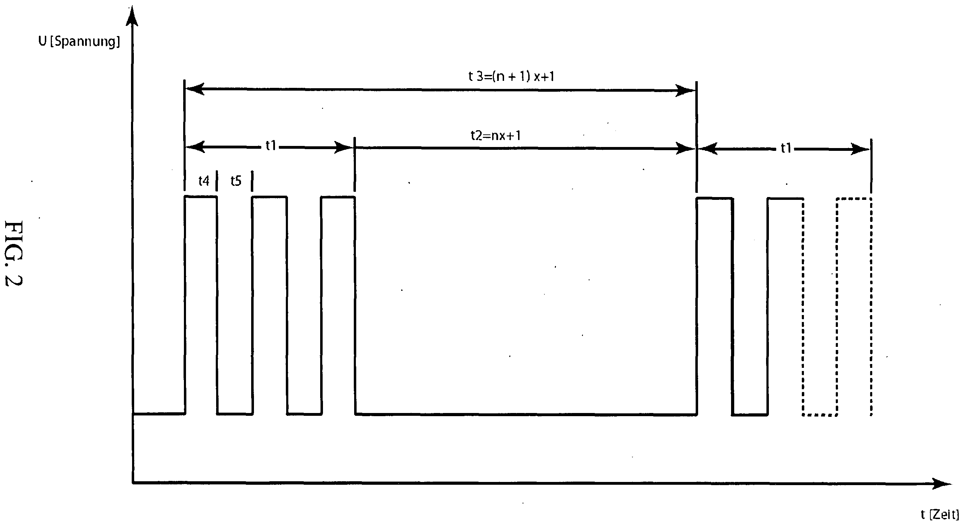

Jeder der zwei IR/UV-Sender 2.1 und 2.2 nach FIG. 1 bzw. einer Lichtquelle 2.1 nach **FIG. 3** steht mit einem Impulsgenerator IG in Verbindung, welcher periodische Impulse und Bedarfsweise zusätzlich getaktet in eine An- und Ausphase tl, t2 sendet, wobei die Ausphase t2 ein zeitliches Vielfaches der Anphase t1 beträgt (siehe **FIG. 2**, Signalverläufe Spannung U über die Zeit t). Die zusätzliche Taktung kann aus unterschiedlich langen Einzelimpulsen t4 und Unterbrechungen t5 so angeordnet werden, dass immer die Anphase die gleiche Zeitdauer t1 aufweist. Die Steuerung erfolgt mittels einer Auswerteschaltung C, wobei zwischen Lichtquelle/IR/UV-Sender 2.1, 2.2, .. ein Impuls-Leistungsverstärker IV angeordnet ist.

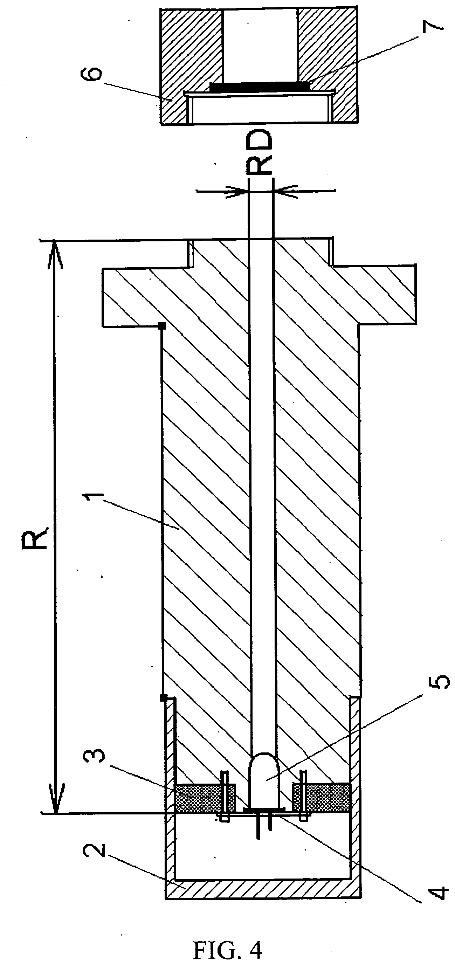

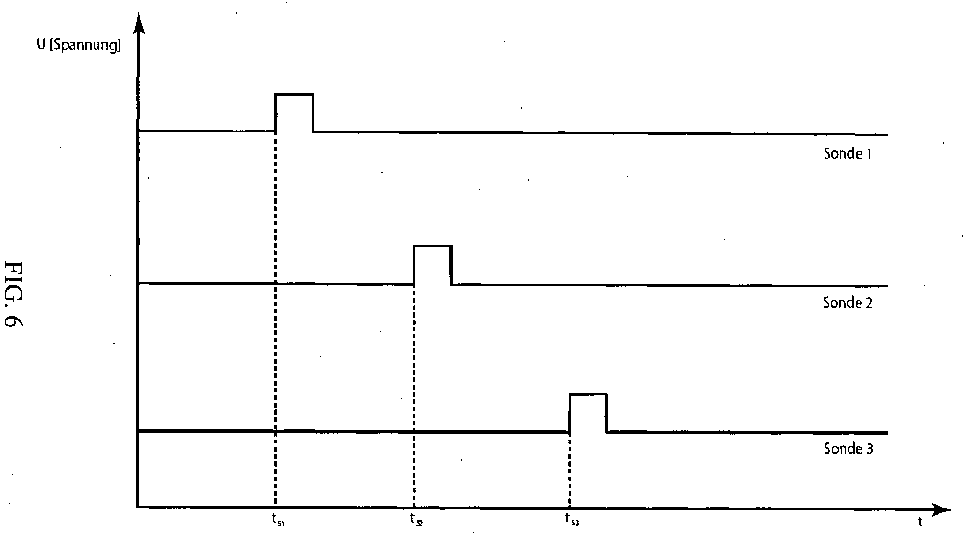

Wie **FIG. 1** und **FIG. 3** zeigen, sind mit jedem IR/UV-Empfanger 1.1, 1.2, .. ein Verstärker V1, V2, .. und mit diesen die Auswerteschaltung C verbunden. Zur Abschwächung von Fremdlicht ist - wie im Detail **FIG. 4** dargestellt ist - der Licht-Empfänger 1.1 als Röhre R mit einer Längenerstreckung von einem Mehrfachen des inneren Röhrendurchmessers RD ausgestaltet, wobei von der Auswerteschaltung C die von den Licht-Empfängern/Sonden 1.1, 1.2, ... empfangenen Impulse (siehe **FIG. 6** mit drei Sonden und die Signalverläufe Spannung U über die Zeit t) ausgewertet werden.

Die Messsignale werden in Gruppen von drei oder mehr Signalen (gepulst) gesendet, danach folgt die Ausphase t2, vorzugsweise von der 2- bis 4-fachen Dauer der Anphase t1 (siehe **FIG. 2**). Durch diese Kodierung erreicht man eine weitere Differenzierung des Nutzlichtes vom Störlicht.

Zur Abschwächung der Lichtsignale wird eine dünne Aufnahmebohrung oder Röhre R vor dem Lichtempfängerdioden 1.1, 1.2, ... verwendet. Die Bohrung oder Röhre R in einem Trägermaterial 1 mit Kappe/Trägersystem 6 für ein Sperrfilter, insbesondere Tageslichtsperrfilter 7, und in einer Lichtschutzhaube 2 hat eine Länge von minimal dem 5-fachen ihres Durchmessers RD (siehe **FIG. 4**).

Sie ist durch eine nicht glänzende raue oder matte Oberfläche im optisch relevanten Innenbereich charakterisiert. Durch diese spezifischen Merkmale kann gewährleistet werden, dass das Störlicht, welches seitlich in die Röhre R einfällt, weitestgehend eliminiert wird und nicht bis zu einer Lichtempfängerdiode 5 (Licht-Empfänger/Sonde 1.1) mit Trägerleiterplatte 4 gelangen kann. Das gerade einfallende (parallel zur Röhrenmittenachse) Nutzlicht wird hingegen nicht bzw. vernachlässigbar beeinflusst.

Durch den Einsatz von IR- oder UV- Sperrfiltern 7 kann eine Blockierung des sichtbaren Lichtes - Durchlass ab einer Wellenlänge oberhalb von ca. 880 nm oder unterhalb von ca. 350 nm. - erzielt werden. Bei der in **FIG. 4** dargestellten Ausführungsform weist die Röhre R ein auf der Fronseite angeordnetes Tageslichtsperrfilter 7 auf.

Das Trägersystem 6 ist bei der in FIG. 4 dargestellten Ausführungsform als Schraubkappe mit einem Innengewinde ausgestaltet, welche auf einem an der Frontseite der Röhre R befindlichen Außengewinde bis zu einem Anschlag/Flansch 1 aufgeschraubt wird. Auf der gegenüberliegenden Seite der Röhre R ist der jeweilige Lichtempfänger 1.1, 1.2 auf einer Trägerleiterplatte 4 (mit oder ohne Signalvorverstärker 4) angeordnet, wobei diese Stirnseite der Röhre R von einer lichtdichten Haube 2 umschlossen ist. Die innerhalb der Haube 2 befindliche Trägerleiterplatte 4 wird an der Stirnseite der Röhre R befestigt, wobei zwischen dieser und der Trägerleiterplatte L Dämpfungs- und Isolationsmaterial 3 angeordnet ist.

Das Fremdlicht kann auch durch schmalbandige IR-/UV-Filter auf ein Minimum reduziert werden, so dass das Nutzsignal möglichst stark gegenüber dem Störsignal erscheint.

In den nachfolgenden Verstärkern V1, .. (siehe **FIG. 1** und **FIG. 3**) wird das Signal so aufbereitet, dass die unterschiedlichen Zeiten der Reflexionen in den Signalprozessoren/Auswerteschaltung C zur Geschwindigkeitsmessung herangezogen werden können. Weiterhin kann die Länge eines Fahrzeuges zur Klassifikation (LKW, Kleintransporter oder PKW) oder der Abstand zwischen zwei Fahrzeugen ermittelt werden. Eine Anzeigeeinheit AE soll dem Nutzer dazu dienen, dass beim Aufbau- des Einseitenlichtsensors an der Straße bereits signalisiert wird, ob das Gerät voll einsatzbereit ist. Weiterhin kann die abschaltbare Anzeigeeinheit AE die Geschwindigkeiten alphanumerisch oder als Lumineszenzdioden (z.B. grün - in Ordnung, gelb - im Toleranzbereich, rot - zu schnell) anzeigen. Die aufbereiteten Daten werden dem Anwenderprogramm über Funktionsaufrufe über ein Kabel zur Verfügung gestellt sowie eine Fotoeinrichtung (ggf. mit einer weiteren Blitzeinheit) angesteuert werden. Insbesondere können alle Daten eine gerichtsverwertbare eineindeutige Signatur mit einem Zeitstempel erhalten, welche auch in das Bild (fälschungssicher) eingeprägt wird.

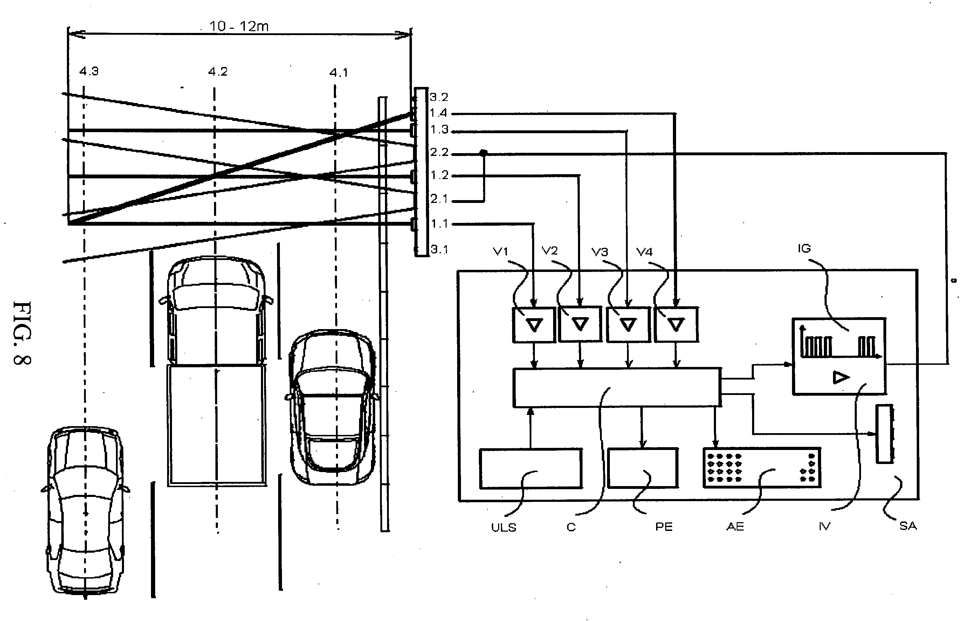

Das oben beschriebene Messsystem/Verfahren kann z.B. als Geschwindigkeitsmessanlage zur Verkehrsüberwachung mit drei oder [vier] Lichtempfängern 1.1, 1.2, 1.3, [1.4] (siehe **FIG. 1** oder **FIG.8**), oder auch zur Zählung von Produkten auf Produktionsbändern (Flaschen, Kartons etc.) in der 1-Empfanger-Variante verwandt werden (siehe **FIG. 3**).

Durch den Einsatz von zwei Laser-Sendern/ Laserpointern 3.1, 3.2 kann das Ausrichten des als Messbalken ausgestalteten Einseitenlichtsensor ES parallel zur Bezugsebene/Fahrbahn die Erkennung der Nutzsignale erleichtern, da die Lichtsensoren 1.1, 1.2, 1.3 das Licht von den selben Objekt- oder Fahrzeugteilen aus der gleichen Höhe erhalten (siehe **FIG. 5**). Werden, wie in **FIG. 5** dargestellt, drei Lichtsensoren 1.1, 1.2, 1.3 in festgelegtem Abstand L1/L2 (beispielsweise jeweils 50 cm) angeordnet, wobei die Gesamtlänge L3 des Messbalkens ES beispielsweise 120 cm ist, dann können die von den Lichtquelle/IR/UV-Sender 2.1 und 2.2 gepulsten und getakteten Lichtstrahlen zur Messung der Geschwindigkeit herangezogen werden.

Die Lager der Empfangseinheit sind mechanisch sehr genau und stabil gefertigt, da der Öffnungswinkel zum Lichtsensor nur 1° bis 2° beträgt. Durch die Ausgestaltung eines plattenartigen, mindestens ein Array von Einzel-LEDs EL1, .. , ELn tragenden und diese elektrisch kontaktierenden Trägers T können mehrere hundert Laserdioden EL1, .. , ELn gleichzeitig Lichtimpulse senden. Die Kühlung der Trägerplatine T kann durch thermisch leitfähige Montage mit einem Kühlkörper oder dem Gehäuse des Einseitenlichtsensor ES erfolgt. Gleichzeitig wird dadurch eine winkelgenaue Ausrichtung der Laserdioden EL1,.. , ELn ermöglicht, so dass der Lichtblitz sehr genau fokussiert wird.

In **FIG. 6** sind die Signalverläufe der Impulsreflektionen über die Zeit einer Ausführungsform eines Einseitenlichtsensors mit drei IR/UV-Sender gemäß der Erfindung angegeben. Die Berechnungen der Geschwindigkeiten aus den Impulszeiten erfolgt gemäß nachfolgender Gleichungen (1) bis (3):

$$tm1 = ts2 - ts1 \qquad vm1 = 0,5 : t^2m1 \qquad (1)$$

$$tm2 = ts3 - ts2 \qquad vm2 = 0,5 : t^2m2 \qquad (2)$$

$$tm3 = ts3 - ts1 \qquad vm3 = 1 : t^2m3 \qquad (3)$$

Liegen die errechneten Geschwindigkeiten in dem von der Physikalisch-Technischen Bundesanstalt PTB (PTB - ein natur- und ingenieurwissenschaftliches Institut und Behörde der Bundesrepublik Deutschland für das Messwesen) vorgegebenen Toleranzbereich, so kann der niedrigste Wert der Geschwindigkeit als gültiger Geschwindigkeitsmesswert verwendet werden.

Die beiden an den Enden des Lichtbalkens ES angeordneten Laserpointer 3.1, 3.2 erleichtern bei der Aufstellung des Lichtbalkens ES die parallele Ausrichtung zur Bezugsebene/ Fahrbahn. Dadurch wird durch alle drei Lichtsensoren/Lichtempfänger 1.1, 1.2, 1.3 derselbe Bereich eines Objektes/Fahrzeuges durch die Lichtstrahlen der Lichtquellen/IR/UV-Sender 2.1 und 2.2 getroffen und erzeugen somit einen ähnlichen Kurvenverlauf der Reflektionen. Es wird damit auch eine höhere Genauigkeit bei den Messwerten erreicht.

Wie **FIG. 1** und **FIG 3** aufzeigen, kann mittels eines Umgebungslichtsensors ULS die Intensität der Lichtsendedioden 2.1 und 2.2 den Erfordernissen des Umgebungslichtes dermaßen anpassen, dass ohne Fremd- oder Umgebungslicht die Lichtstärke herabgesetzt und damit auch die Lebensdauer der Sendedioden 2.1 und 2.2 erhöht und der Strom von der Stromversorgung gesenkt werden kann. Unter Extrembedingungen bei sehr starkem Sonnenschein ist ein Umschalten auf Passivbetrieb möglich.

Zur Sicherung der Unversehrtheit der Daten wird beim erfindungsgemäßen Verfahren der Datensatz mit Datum, Uhrzeit, Messgerätenummer, Impulszeiten, Geschwindigkeit, aktiver/passiver Betriebszustand, Bemerkungen, ... mit einer fälschungssicheren und anerkannten Signatur versehen. Durch einen hochgenauen Uhrzeit-Baustein mit regelmäßiger GPS- oder DC777-Synchronisation kann der Datensatz zur Kopplung an Beleg- und/oder Identfotos mit gleichem Zeitstempel genutzt werden.

Zusammenfassend werden beim erfindungsgemäßen Messsystem/Verfahren periodische Impulse eines Impulsgenerators IG zusätzlich in eine An- und Ausphase tl, t2 getaktet, wobei die Ausphase t2 ein zeitliches Vielfaches der Anphase t1 beträgt. Dieses gepulste Nutzlicht mit Ausphase t2 als Zeitintervall mit Impulsmuster von einer leistungsstarken, schmalwinkligen IR- oder UV-Strahlungsquelle 2.1, ... ausgesendet, kann als empfangener Lichtstrom von einem Lichtsensor 1.1, .. als Schaltsignal separiert und genutzt werden. Die Impulslängen / -Frequenz können unterschiedliche Werte annehmen, müssen aber immer eine gleichlange Anphase t1 ergeben. Der so gewonnene Informationsgehalt kann für Zusatzfunktionen oder erhöhte Zuverlässigkeit der Signale genutzt werden.

Durch die Auswahl geeigneter Sende- und Empfangsdioden im unsichtbaren IR- oder UV-Bereich können auch Tageslichtsperrfilter F genutzt werden, die den größten Teil des Fremdlichtes stark reduzieren.Um Fremdlicht noch weiter abzuschwächen, wird die Lichtempfangsdiode am Ende einer Bohrung oder Röhre R angebracht, die mehr als 5 mal länger ist als der Bohrungsdurchmesser RD. Das Optimum liegt bei 7 - 20-fachem des jeweiligen Durchmessers. Die Bohrung weist eine nicht glänzende, raue und/oder mattschwarze Oberfläche zur Reflexionsminderung, ähnlich wie bei Objektiven von Fotoapparaten, auf.

Wird ein Objekt ohne den Einsatz von gepulstem Licht vor einem Lichtsensor 1.1, .. vorbeigeführt, so wird in Abhängigkeit des Objektes und der Richtung des Fremdlichtes eine Erhöhung oder Reduzierung des Lichtstromes feststellbar sein. Eine Steigerung des empfangenen Lichtstromes ergibt sich, wenn ein Objekt das einfallende Licht in Richtung Lichtsensor 1.1, .. reflektiert. Eine Abschwächung ergibt sich dagegen, wenn das ausgesendete Licht in eine andere Richtung reflektiert oder durch dunkle und raue Oberflächen absorbiert wird. Trotz der Reflexion, der Absorption und dem störenden Fremdlicht findet sich in dem empfangenen Gesamtlichtstrom das gepulste und getaktete Nutzlichtsignal in unterschiedlicher Stärke wieder. Durch die Selektion der Impulsmuster und des Verhältnisses der Impulssendefolge und Austastzeit kann eine Fehlinterpretation völlig ausgeschlossen werden.

Insbesondere ist die Schaltungselektronik derart ausgelegt, dass bei zufälligem Einstrahlen von direktem Sonnenlicht der mehrere 1000-fache Lichtstrom ohne Zerstörung der weiteren Elektronik herunter geregelt wird. Deshalb kann der erfindungsgemäße aktive Einseitenlichtsensor ES auch an Stellen eingesetzt werden, an denen Lichtreflexe und Störlicht den Einsatz von passiven Einseitensensoren oder Lichtschranken ausschließen.

Die Erfindung ist nicht auf die dargestellten und beschriebenen Ausführungsbeispiele beschränkt, sondern umfasst auch alle im Sinne der Erfindung gleichwirkenden Ausführungen.

Im Rahmen der Erfindung kann durch einen abgewinkelten Höhendetektor die Fahrzeugart PKW, Kleintransporter, LKW, Bus oder Krad zusätzlich zur Fahrzeuglängendetektion über die Verweildauer im Bereich der Abstands- / Geschwindigkeitsdetektoren sicheren Aufschluss zur Art des Fahrzeugs liefern, wobei der Signalpegelunterschied des erhöht und winklig angebrachten Höhendetektors zum darunter liegenden Abstands-/Geschwindigkeitsdetektor Auskunft über die Fahrzeughöhe in Abhängigkeit von der Fahrspur gibt. Durch die Bereitstellung von immer leistungsfähigeren und schnelleren Laserdioden mit extrem kurzen Anstiegs- und Abfallsflanken im nsek- oder sogar psek-Bereich ist es möglich, durch sehr schnelle Impulsfolgen Frequenzmodulationen praktisch zu nutzen.

Somit kann für die Abstands-/ Geschwindigkeitsmessung ein frequenzmoduliertes Licht verwendet werden, wobei Fehlmessungen durch Fremdlicht ausgeschlossen werden, da die Abtastung auf die aufmodulierten Frequenzen eindeutige Ergebnisse erzeugt und durch die unterschiedlichen Laufzeiten des Lichtes, die Fahrspur des gemessenen Fahrzeugs zuverlässig durch die Frequenzunterschiede an der Lichtquelle zu den Empfangsdetektoren ermittelt werden kann; bei Verwendung von unterschiedlichen Frequenzen beginnend mit niedrigen und höheren Frequenzen am Ende einer Impulsgruppe, kann die Messung des Frequenzunterschieds zur gesendeten Frequenz zeitgleich zur empfangenen Frequenz durch Frequenzvergleich der Abstand des Fahrzeugs zum Messsensor eindeutig eine Fahrspurenermittlung erfolgen, wobei durch das frequenzmodulierte Eigenlicht die Abstands-/ Höhen- und Geschwindigkeitsdetektoren unempfindlicher gegenüber Störquellen wie Aufbauwinkel, Reflektionen oder Fremdlicht sind und auch in Kurven oder bei unebenen, gekrümmten Straßen nur eine geringe Anzahl von nicht auswertbaren Messungen entsteht.

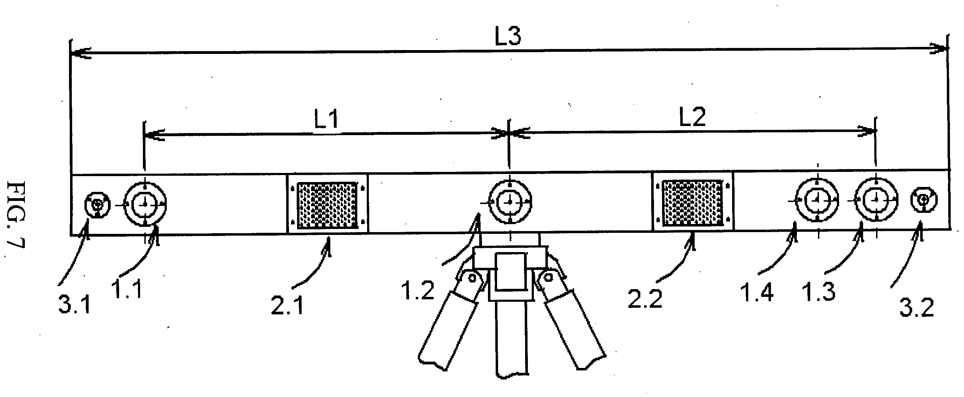

Weiterhin können durch den Einsatz eines 4. Sensors 1.4 (Schieler) (siehe **FIG.7**), vorzugsweise in der Nähe des dritten IR/UV- Sensors 1.3 einer Gruppe mit drei Lichtsensoren/Lichtempfängern 1.1, 1.2, 1.3, der nicht parallel zur optischen Achse der Lichtempfänger 1.1, 1.2 und 1.3 ausgerichtet ist, weitere Funktionen/Detektionen bereitgestellt werden. Vorzugsweise ist der Schieler 1.4 so angebracht, dass dieser nicht den gleichen vertikalen und/oder horizontalen Winkel wie die - im vorliegenden Beispiel drei - Lichtsensoren/Lichtempfängern 1.1, 1.2, 1.3 der Gruppe hat.

Wird die optische Achse des Schielers 1.4 so nach unten z.B. auf das Ende der 1. Fahrbahn ausgerichtet, so werden nur die Fahrzeuge oder Objekte reflektieren, die am nächsten zum Einseitensensor ES vorbeigeführt werden. Bei Fahrzeugen in Ländern mit Rechtsverkehr betrifft dies die rechte Fahrspur oder Rechtsabbiegespur.

Wird die optische Achse so nach oben gerichtet, so dass nur hohe Fahrzeuge eine Reflektion auslösen, so können z.B. auf der rechten Fahrspur LKWs, Busse oder Kleintransporter selektiert werden. PKWs oder Motorräder werden in diesem Fall keine Reflektion auslösen, da sie unter der optischen Achse des Lichtsensors 1.4 durch fahren. Dadurch kann ein Fahrverbot für LKW oder das verbotene Befahren von Busfahrspuren ermittelt werden.

Eine weitere Funktionalität kann mittels der in **FIG. 8** dargestellten Ausführungsform bereitgestellt werden, wenn der Schieler 1.4 in der gleichen optischen Achse horizontal ausgerichtet ist, wie die Lichtsensoren 1.1, 1.2 und 1.3, aber nicht wie diese Lichtsensoren 1.1, 1.2 und 1.3 90° zur Fahrbahn, sondern so angeordnet ist, dass sich die optische Achse des Schielers 1.4 mit der optischen Achse des Lichtsensors 1.1 in einem vorgegebbaren Abstand, vorzugsweise erst bei ca. 10 - 12 m trifft. Dieser Aufbau des Schielers 1.4 ermöglicht die Fahrbahn zu detektieren, auf welcher sich ein Fahrzeug befindet. Wird ein Lichtreflex des Schielers 1.4 etwa zeitgleich mit dem Lichtsensor 1.1 gemessen, so befindet sich das Fahrzeug auf der am weitesten entfernten Fahrbahn (links). Erfolgt der Lichtreflex vom Schieler 1.4 etwa zeitgleich mit Lichtsensor 1.3, so befindet sich das Fahrzeug auf der zum Einseitenlichtsensor ES nächsten Fahrbahn (rechts). Dem entsprechend wird ein Lichtreflex vom Schieler 1.4 etwa zeitgleich mit dem Lichtsensor 1.2 gemessen, so befindet sich das Fahrzeug folgerichtig auf der mittleren Fahrbahn, d.h.

Sensor 4 zeitnah zu Sensor 1 - linke Fahrspur,

Sensor 4 zeitnah zu Sensor 2 - mittlere Fahrspur,

Sensor 4 zeitnah zu Sensor 3 - rechte Fahrspur.

**Patentansprüche**

1. Messsystem mit mindestens einem gepulsten Einseitenlichtsensor (ES) mit mindestens einem IR- oder UV-Sender (2) und IR- oder UV-Empfänger (1) zum Empfang des von einem bewegten Objekt reflektierten gepulsten IR- oder UV-Lichtes, **dadurch gekennzeichnet, dass** zur Geschwindigkeitsmessung des sich bewegenden Objekts, der Einseitenlichtsensor (ES) mindestens drei IR- oder UV-Empfänger (1.1, 1.2, 1.3) und zwei abwechselnd dazwischen angeordnete IR- oder UV-Sender (2.1, 2.2) aufweist, dass am Anfang der Messstrecke des Einseitenlichtsensors (ES) ein IR- oder UV-Empfänger (1.1) und im Abstand in Bewegungsrichtung des Objekts hierzu der IR- oder UV-Sender (2.1) parallel zur Bezugsebene oder zur Fahrbahn angeordnet sind, dass die IR- oder UV-Sender (2.1) mit einem Impulsgenerator (IG) in Verbindung stehen, der so angeordnet ist, dass er periodische Impulse zusätzlich getaktet in eine An- und Ausphase (t1, t2) sendet, wobei die Ausphase (t2) ein zeitliches Vielfaches der Anphase (t1) beträgt, dass mit jedem IR- oder UV-Empfänger (1.1, 1.2, ..) ein Verstärker (V1, V2, ..) und eine Auswerteschaltung (C), die so angeordnet ist, dass sie das gepulste und getaktete Nutzlichtsignal unter Selektion der Impulsmuster, des Verhältnisses der Impulssendefolge und Austastzeit und einer Erhöhung oder Reduzierung der Amplitude des Nutzsignals auswertet, verbunden sind und dass zur Abschwächung von Fremdlicht der IR- oder UV-Empfänger (1.1, 1.2, ..) am Ende innerhalb einer Röhre (R) angebracht ist und die Röhre (R) mit einer Längenerstreckung von mehr als 5-fachen des inneren Röhrendurchmessers (RD) und im optisch relevanten Innenbereich mit einer rauen oder matten Oberfläche ausgestaltet ist.

2. Messsystem nach Anspruch 1, **dadurch gekennzeichnet, dass** jede Röhre (R) der IR- oder UV-Empfänger (1.1, 1.2, 1.3) einen auf der Frontseite angeordneten Tageslichtsperrfilter (7) aufweist.

3. Messsystem nach Anspruch 2, **dadurch gekennzeichnet, dass** der Einseitenlichtsensor (ES) als Messbalken ausgestaltet ist und dass zum Ausrichten der Messbalken (ES) mindestens zwei weitere im Abstand zueinander angeordnete Laser-Sender/- Pointer (3.1, 3.2) vorhanden sind.

4. Messsystem nach Anspruch 1, **dadurch gekennzeichnet, dass** der IR- oder UV-Sender (2.1) auf einem plattenartigen, mindestens ein Array von Einzel- LEDs (EL1, .. , ELn) tragenden und diese elektrisch kontaktierenden Träger (T) angeordnet ist, wobei der Betrieb der Einzel-LEDs (EL1, .. , ELn) mit Stromimpulsen einer Stromamplitude erfolgt, die um mehr als den Faktor fünf bis zehn, vorzugsweise sieben, größer ist als der bei Konstantbetrieb zulässige Maximalstrom.

5. Messsystem nach Anspruch 4, **dadurch gekennzeichnet, dass** die Kühlung der Trägerplatine (T) durch thermisch leitfähige Montage mit einem Kühlkörper oder dem Gehäuse des Einseitenlichtsensors (ES) erfolgt.

6. Messsystem nach Anspruch 1, **dadurch gekennzeichnet, dass** mit der Auswerteschaltung (C) ein Umgebungslichtsensor (UL) verbunden ist.

7. Messsystem nach Anspruch 1, **dadurch gekennzeichnet, dass** zwischen Auswerteschaltung (C) und IR- oder UV-Sender (2.1, 2.2, ..) ein Impuls- Generator (IG) und Impuls-Leistungsverstärker (IV) angeordnet ist.

8. Messsystem nach Anspruch 1, **dadurch gekennzeichnet, dass** eine abschaltbare Anzeigeeinheit (AE) die Geschwindigkeiten alphanumerisch oder durch Farbwechsel von Lumineszenzdioden anzeigt.

9. Messsystem nach Anspruch 1, **dadurch gekennzeichnet, dass** die Daten am Ausgang der Auswerteschaltung/Controller (C) und durch die Protokolleinheit eine gerichtsverwertbare eindeutige Signatur mit einem Zeitstempel enthalten und an dem Schaltausgang (SA) als Schaltimpulse sowie als Datenstrom zur Verfügung gestellt werden.

10. Messsystem nach Anspruch 1, **dadurch gekennzeichnet, dass** für die Detektion von Objekt-/Fahrzeugposition und/oder Objekt-/Fahrzeuggröße, in der Nähe des dritten IR- oder UV-Sensors (1.3) einer Gruppe mit drei Lichtsensoren/Lichtempfängern (1.1, 1.2, 1.3) zusätzlich ein vierter IR- oder UV- Sensor (1.4) angebracht wird, der nicht den gleichen vertikalen und/oder horizontalen Winkel wie die Sensoren (1.1, 1.2, 1.3) der Gruppe hat, so dass bei gleichem Horizontalwinkel, aber Veränderung des Vertikalwinkels nach unten in Richtung der Fahrbahn, eine Selektion der Objekte/Fahrzeuge im Nahbereich des Einseitenlichtsensors (ES) nach Fahrspur und dass bei einem Vertikalwinkel nach oben eine Selektion der Objekte/Fahrzeuge nach Größe oder Typ erfolgen kann und dass bei gleichem Vertikalwinkel aber Veränderung des Horizontalwinkels dermaßen, dass sich die optischen Achsen des vierten IR- oder UV- Sensors (1.4) beim Messen von Fahrzeugen erst in einem vorgebbaren Abstand zum Einseitenlichtsensor (ES) mit der optischen Achse eines Sensors (1.1) der Gruppe trifft, die Fahrzeugposition durch zeitnahe reflektierte Impulse zu den Sensoren (1.1, 1.2, 1.3) der Gruppe bestimmt werden kann.

11. Messsystem mit mindestens einem gepulsten Einseitenlichtsensor (ES) mit mindestens einem IR- oder UV-Sender und IR- oder UV-Empfänger (1) zum Empfang des von einem bewegten Objekt reflektierten gepulsten IR- oder UV-Lichtes, **dadurch gekennzeichnet, dass** zur Zählung von-sich bewegenden Objekten am Anfang der Messstrecke des Einseitenlichtsensors (ES) ein IR- oder UV-Empfänger (1.1) und im Abstand in Bewegungsrichtung des Objekts hierzu ein IR- oder UV-Sender (2.1) parallel zur Bezugsebene oder zur Fahrbahn angeordnet sind, dass der IR- oder UV-Sender (2.1) mit einem Impulsgenerator (IG) in Verbindung steht, der so angeordnet ist, dass er periodische Impulse zusätzlich getaktet in eine An- und Ausphase (t1, t2) sendet, wobei die Ausphase (t2) ein zeitliches Vielfaches der Anphase (t1) beträgt, dass mit jedem IR- oder UV-Empfänger (1.1, 1.2, ..) ein Verstärker (V1, V2, ..) und eine Auswerteschaltung (C), die so angeordnet ist, dass sie das gepulste und getaktete Nutzlichtsignal unter Selektion der Impulsmuster, des Verhältnisses der Impulssendefolge und Austastzeit und einer Erhöhung oder Reduzierung der Amplitude des Nutzsignals auswertet, verbunden sind und dass zur Abschwächung von Fremdlicht der IR oder UV-Empfänger (1.1, 1.2, ..) am Ende innerhalb einer Röhre (R) angebracht ist und die Röhre (R) mit einer Längenerstreckung von mehr als 5 -fachen des inneren Röhrendurchmessers (RD) und im optisch relevanten Innenbereich mit einer rauen oder matten Oberfläche ausgestaltet ist.

12. Messsystem nach Anspruch 1 oder 11, **dadurch gekennzeichnet, dass** zur Kodierung der IR- oder UV-Sender (2.1) Messsignale in Gruppen von drei oder mehr Signalen gepulst sendet, und dass danach die Ausphase (t2), vorzugsweise von der 2- bis 4-fachen Dauer der Anphase (t1) folgt.

13. Messsystem nach Anspruch 12, **dadurch gekennzeichnet, dass** der IR- oder UV-Sender (2.1) ein frequenzmoduliertes Licht sendet und dass bei Verwendung von unterschiedlichen Frequenzen, beginnend mit niedrigen und höheren Frequenzen am Ende einer Impulsgruppe, die Messung des Frequenzunterschieds zur gesendeten Frequenz zeitgleich zur empfangenen Frequenz durch Frequenzvergleich der Abstand des Fahrzeugs zum Einseitenlichtsensor (ES) eindeutig eine Fahrspurenermittlung erfolgt.

14. Messsystem nach Anspruch 1 oder 11, **dadurch gekennzeichnet, dass** auf einem an der Frontseite der Röhre (R) befindlichen Außengewinde eine Schraubkappe (6) mit einem Innengewinde bis zu einem Anschlag/Flansch (1) aufgeschraubt ist und dass in der Schraubkappe (6) ein Sperrfilter (7) angeordnet ist.

15. Messsystem nach Anspruch 1 oder 11, **dadurch gekennzeichnet, dass** auf der gegenüberliegenden Seite der Röhre (R) der jeweilige IR- oder UV-Empfänger (1.1, 1.2, ..) auf einer Trägerleiterplatte (4) angeordnet ist, wobei diese Stirnseite der Röhre (R) von einer lichtdichten Haube (2) umschlossen ist und dass die innerhalb der Haube (2) befindliche Trägerleiterplatte (4) an der Stirnseite der Röhre (R) befestigt ist, wobei zwischen dieser und der Trägerleiterplatte (4) Dämpfungs- und Isolationsmaterial (3) angeordnet ist.

**Claims**

1. Measuring system comprising at least one pulsed single-side light sensor (ES) with at least an IR- or an UV-transmitter (2) and an IR- or an UV-receiver (1) for receiving the pulsed IR- or UV-light reflected from a moving object, **characterized in that** for speed measurement of the moving object, the single-side light sensor (ES) having at least three IR- or UV-light receiver (1.1, 1.2, 1.3) and two alternately arranged there between IR- or UV-transmitter (2.1), wherein at the beginning of the measuring path of the single-side light sensor (ES) an IR- or UV-receiver (1.1) and at a distance in the moving direction of the object thereto the IR- or UV-transmitter (2.1) are arranged parallel to the reference plane or the road, wherein the IR- or the UV-transmitter (2.1) are in connection with a pulse generator (IG), which is such arranged that it sends periodically pulses in addition clocked in an on- and off-phase (t1, t2), wherein the off phase (t2) is a temporal multiple of the on-phase (t1), wherein with each IR- or UV-receiver (1.1, 1.2, ..), an amplifier (V1, V2, ..) and an evaluation circuit (C) are connected, which are arranged such that they evaluates the pulsed and clocked useful light signal by selection of the pulse pattern, the ratio of the pulse sending sequence and blanking time and by an increase or decrease in the amplitude of the useful signal, and wherein for the attenuation of extraneous light, the IR- or UV-receiver (1.1, 1.2, :) is mounted at the end within a tube (R) and the tube (R) is designed with a length extension of more than 5 times of the inner tube diameter (RD) and in the optically relevant interior with a rough or matt surface.

2. Measuring system according to claim 1, **characterized in that** each tube (R) of the IR- or UV-light receiver (1.1, 1.2, 1.3) has a daylight blocking filter (7) arranged at the front side.

3. Measuring system according to claim 2, **characterized in that** the single-side light sensor (ES) is designed as a measuring beam and that for aligning the measuring beam (ES) at least two further spaced-apart laser transmitter or -pointer (3.1, 3.2).

4. Measuring system according to claim 1, **characterized in that** the IR- or UV-transmitter (2.1) is arranged at a plate-like, supporting at least one array of single LEDs (EL1, .., ELn) and this electrically contacting carrier (T), wherein the operation of the individual LEDs (EL1, .., ELn) takes place with current pulses of a current amplitude by more than a factor of five to ten, preferably seven, greater than the maximum current permissible in constant operation.

5. Measuring system according to claim 4, **characterized in that** the cooling of the carrier board (T) is done by thermally conductive mounting with a heat sink or the housing of the single-side light sensor (ES).

6. Measuring system according to claim 1, **characterized in that** an ambient light sensor (UL) is connected to the evaluation circuit (C).

7. Measuring system according to claim 1, **characterized in that** between the evaluation circuit (C) and IR- or UV-transmitter (2.1, 2.2, ..) a pulse generator (IG) and a pulse power amplifier (IV) are arranged.

8. Measuring system according to claim 1, **characterized in that** a turn-off display unit (AE) displays the speeds alphanumerically or by color change of light-emitting diodes.

9. Measuring system according to Claim 1, **characterized in that** the data at the output of the evaluation circuit or controller (C) contain a court-usable unique signature with a time stamp by the protocol unit and are made available at the switching output (SA) as switching pulses and as a data stream.

10. Measuring system according to claim 1, **characterized in that** for the detection of object or vehicle position and / or object or vehicle size, in the vicinity of the third IR- or UV-sensor (1.3) of a group with three light sensors or light receivers (1.1, 1.2, 1.3) in addition a fourth IR- or UV-sensor (1.4) is mounted, which does not have the same vertical and / or horizontal angle as the sensors (1.1, 1.2, 1.3) of the group, so that at the same horizontal angle, but changing the vertical angle down in the direction of the road, a selection of objects or vehicles in the vicinity of the single-side light sensor (ES) by lane can be made and that at a vertical angle upwards, a selection of objects or vehicles can be made by size or type and that at the same vertical angle but changing the horizontal angle so that the optical axes of the fourth IR- or UV-sensor (1.4) when measuring vehicles meets only at a predeterminable distance to the single-side light sensor (ES) with the optical axis of a sensor (1.1) of the group, and the vehicle position can be determined by timely reflected pulses to the sensors (1.1, 1.2, 1.3) of the group.

11. Measuring system comprising at least one pulsed single-side light sensor (ES) with at least an IR- or an UV-transmitter (2) and an IR- or an UV-receiver (1) for receiving the pulsed IR- or UV-light reflected from a moving object, **characterized in that** for counting of the moving objects, at the beginning of the measuring path of the single-side light sensor (ES) an IR- or UV-receiver (1.1) and at a distance in the moving direction of the object thereto the IR- or UV-transmitter (2.1) are arranged parallel to the reference plane or the road, wherein the IR- or the UV-transmitter (2.1) are in connection with a pulse generator (IG), which is such arranged that it sends periodically pulses in addition clocked in an on- and off-phase (t1, t2), wherein the off phase (t2) is a temporal multiple of the on-phase (t1), wherein with each IR- or UV-receiver (1.1, 1.2, ..), an amplifier (V1, V2, ..) and an evaluation circuit (C) are connected, which are arranged such that they evaluates the pulsed and clocked useful light signal by selection of the pulse pattern, the ratio of the pulse sending sequence and blanking time and by an increase or decrease in the amplitude of the useful signal, and wherein for the attenuation of extraneous light, the IR- or UV-receiver (1.1, 1.2, :) is mounted at the end within a tube (R) and the tube (R) is designed with a length extension of more than 5 times of the inner tube diameter (RD) and in the optically relevant interior with a rough or matt surface.

12. Measuring system according to claim 1 or 11, **characterized in that** for coding of the IR- or UV-transmitter (2.1) measurement signals are sent pulsed in groups of three or more signals, followed by the off phase (t2), preferably from 2- to 4-fold duration of the on-phase (t1).

13. Measuring system according to claim 12, **characterized in that** the IR- or UV-transmitter (2.1) sends a frequency-modulated light and wherein if using different frequencies starting with lower and higher frequencies at the end of a pulse group, the measurement of the frequency difference between the transmitted frequency to the received frequency can be done at the same time by comparing the frequency and the distance of the vehicle to the measuring sensor (ES) is clearly a lane detection.

14. Measuring system according to claim 1 or 11, **characterized in that** a screw cap (6) with an internal thread is screwed on an external thread located at the front side of the tube (R) up to a stop or a flange (1) and wherein a blocking filter (7) is arranged in the screw cap (6).

15. Measuring system according to claim 1 or 11, **characterized in that** on the opposite side of the tube (R), the respective IR- or UV-light receiver (1.1, 1.2,..) is arranged on a carrier circuit board (4), this end face of the tube (R) being enclosed by a light-tight hood (2), wherein the carrier circuit board (4) located inside the hood (2) is fastened to the front side of the tube (R), and wherein damping and insulation material (3) is arranged between the latter and the carrier circuit board (4).

**Revendications**

1. Système de mesure comprenant au moins un capteur de lumière unilatéral et mono-face pulsé (ES) avec au moins un IR- ou UV-émetteur et IR- ou UV-récepteur de lumière (1) destiné à recevoir la lumière IR- ou UV pulsée réfléchie par un objet en mouvement, **caractérisé en ce que** pour une mesure de vitesse de l'objet en mouvement le capteur de lumière mono-face pulsé (ES) à au moins trois IR- ou UV-récepteurs de lumière (1.1, 1.2, 1.3) et deux alternés disposés entre IR- ou UV-émetteur (2.1), **en ce que** au début du trajet de mesure du capteur de lumière unilatéral (ES), un récepteur IR ou UV (1.1) et à distance direction du mouvement du objet l'émetteur IR ou UV (2.1) sont alignées parallèlement du plan ou du chaussée, **en ce que** l'émetteur IR ou UV (2.1) est en communication avec un générateur d'impulsions (IG), lequel est disposés de même, que lequel émet périodiquement des impulsions synchronisées dans une phase marche ou arrêt (t1, t2), **en ce que** la phase arrêt (t2) est un multiple temporel du phase marche (t1), **en ce que** chaque récepteur IR ou UV (1.1, 1.2, ..), un amplificateur (V1, V2, ..) et un circuit d'évaluation (C) sont disposés de même, tels que sont évalués le signal du lumière utile pulsé et synchronisé avec sélection du modèle d'impulsion, le rapport de la séquence du train d'impulsions et le temps de suppression et avec l'augmentation ou la diminution de l'amplitude du signal utile, et **en ce que** pour l'atténuation de la lumière étrangère, le récepteur IR ou UV (1.1, 1.2, ..) à la fin d'un tube (R) est monté et le tube (R) est conçue avec une extension de longueur supérieure à 5 fois le diamètre du tube interne (RD) et à l'intérieur optiquement pertinent avec une surface rugueuse ou mate.

2. Système de mesure selon la revendication 1, **caractérisé en ce que** chaque tube (R) du récepteur IR ou UV (1.1, 1.2, 1.3) à un filtre de blocage de la lumière du jour (7) disposé à l'avant.

3. Système de mesure selon la revendication 1, **caractérisé en ce que** le capteur de lumière unilatéral (ES) est conçu comme un faisceau de mesure et **en ce que**, pour aligner le faisceau de mesure (ES) à au moins deux autres émetteur ou pointeur laser espacés (3.1, 3.2).

4. Système de mesure selon la revendication 1, **caractérisé en ce que** l'émetteur IR ou UV (2.1) repose sur une plaque, au moins un groupe de DEL uniques (EL1, .., ELn) supportant et que ce support (T) à contact électrique est disposé, le fonctionnement des différentes DEL (EL1, .., ELn) est fait avec des impulsions de courant d'une amplitude de courant supérieure d'un facteur de cinq à dix, de préférence sept, supérieur au courant maximal être admissible en fonctionnement constant.

5. Système de mesure selon la revendication 4, **caractérisé en ce que** le refroidissement de la carte support (T) est réalisé par un montage thermiquement conducteur avec un dissipateur de chaleur ou par le boîtier du capteur de lumière unilatéral (ES).

6. Système de mesure selon la revendication 1, **caractérisé en ce qu'**un capteur de lumière ambiante (UL) est connecté au circuit d'évaluation (C).

**7.** Système de mesure selon la revendication 1, **caractérisé en ce qu'**un générateur d'impulsions (IG) et un amplificateur de puissance à impulsions (IV) sont disposés entre le circuit d'évaluation (C) et l'émetteur IR ou UV (2.1, 2.2, ..).

**8.** Système de mesure selon la revendication 1, **caractérisé en ce qu'**une unité d'affichage à blocage (AE) affiche les vitesses par ordre alphanumérique ou par changement de couleur des diodes électroluminescentes.

**9.** Système de mesure selon la revendication 1, **caractérisé en ce que** les données à la sortie du circuit d'évaluation ou contrôleur (C) et contiennent par l'unité de protocole une signature unique utilisable par le tribunal avec un horodatage et sont mises à disposition à la sortie de commutation (SA) sous forme d'impulsions de commutation et de flux de données.

**10.** Système de mesure selon la revendication 1, **caractérisé en ce que**, pour la détection de la position de l'objet ou du véhicule et / ou de la taille de l'objet ou du véhicule, au voisinage du troisième capteur IR ou UV (1.3) d'un groupe de trois capteurs de lumière ou récepteurs de lumière (1.1, 1.2, 1.3), de plus, un quatrième capteur IR ou UV (1.4) est monté, qui n'a pas le même angle vertical et / ou horizontal que les capteurs (1.1, 1.2, 1.3) du groupe, de sorte que le même angle horizontal, mais modifie l'angle vertical vers le bas en direction de la route, une sélection d'objets ou véhicules se trouvant à proximité du capteur de lumière unilatéral (ES) par voie et qui, verticalement, permet de sélectionner des objets ou véhicules par taille ou type et selon le même angle vertical, tout en modifiant l'angle horizontal de sorte que les axes optiques du quatrième capteur IR ou UV (1.4) lors de la mesure de véhicules uniquement à une distance prédéterminable du capteur de lumière unilatéral (ES) avec lorsque l'axe optique d'un capteur (1.1) du groupe se rencontre, la position du véhicule peut être déterminée par des impulsions réfléchies en temps voulu sur les capteurs (1.1, 1.2, 1.3) du groupe.

**11.** Système de mesure comprenant au moins un capteur de lumière unilatéral et mono-face pulsé (ES) avec au moins un IR- ou UV-émetteur et IR- ou UV-récepteur de lumière (1) destiné à recevoir la lumière IR- ou UV pulsée réfléchie par un objet en mouvement, **caractérisé en ce que** pour une comptage du objet en mouvement le capteur de lumière mono-face pulsé (ES) à au moins trois IR- ou UV-récepteurs de lumière (1.1, 1.2, 1.3) et deux alternés disposés entre IR- ou UV-émetteur (2.1), **en ce que** au début du trajet de mesure du capteur de lumière unilatéral (ES), un récepteur IR ou UV (1.1) et à distance direction du mouvement du objet l'émetteur IR ou UV (2.1) sont alignées parallèlement du plan ou du chaussée, **en ce que** l'émetteur IR ou UV (2.1) est en communication avec un générateur d'impulsions (IG), lequel est disposés de même, que lequel émet périodiquement des impulsions synchronisées dans une phase marche ou arrêt (t1, t2), **en ce que** la phase arrêt (t2) est un multiple temporel du phase marche (t1), **en ce que** chaque récepteur IR ou UV (1.1, 1.2, ..), un amplificateur (V1, V2, ..) et un circuit d'évaluation (C) sont disposés de même, tels que sont évalués le signal du lumière utile pulsé et synchronisé avec sélection du modèle d'impulsion, le rapport de la séquence du train d'impulsions et le temps de suppression et avec l'augmentation ou la diminution de l'amplitude du signal utile, et **en ce que** pour l'atténuation de la lumière étrangère, le récepteur IR ou UV (1.1, 1.2, ..) à la fin d'un tube (R) est monté et le tube (R) est conçue avec une extension de longueur supérieure à 5 fois le diamètre du tube interne (RD) et à l'intérieur optiquement pertinent avec une surface rugueuse ou mate.

**12.** Système de mesure selon la revendication 1 ou 11, **caractérisé en ce que** pour le codage du émetteur IR ou UV (2.1) les signaux de mesure sont envoyés par groupes de trois signaux ou plus puisés, suivis d'une phase arrêt (t2), de préférence d'une durée de 2 à 4 fois la durée d'une phase marche (t1).

**13.** Système de mesure selon la revendication 12, **caractérisé en ce que** l' émetteur IR ou UV (2.1) envoie une lumière modulée en fréquence et **en ce que** lorsqu'on utilise différentes fréquences commençant par des fréquences de plus en plus basses à la fin d'un groupe d'impulsions, la mesure de la différence de fréquence par rapport à la fréquence transmise simultanément à la fréquence reçue est fait en comparant la fréquence et la distance entre le véhicule et le capteur de lumière unilatéral (ES) peut être effectuée avec une détection de voie.

**14.** Système de mesure selon la revendication 1 ou 11, **caractérisé en ce qu'**un bouchon à vis (6) avec un filetage intérieur, qui est vissé sur un filetage extérieur situé sur la face avant du tube (R) jusqu'à une butée ou une bride (1) et **en ce qu'**un filtre barrière est disposé dans le bouchon à vis (6).

**15.** Système de mesure selon la revendication 12, **caractérisé en ce que** sur le côté opposé du tube (R), le récepteur de lumière respectif (1.1, 1.2, ...) est agencé sur une carte de support (4), selon lequel cette face d'extrémité du tube (R) étant entourée par un capot étanche à la lumière (2) et **en ce que** la carte de circuit porteur (4) située à l'intérieur de le capot (2) est fixée au côté avant du tube (R), et **en ce qu'**un matériau d'amortissement et d'isolation (3) étant disposé entre ce dernier et la carte de circuit porteur (4).

FIG. 1

FIG. 2

FIG. 3

FIG. 4

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2209732 C2
- DE 4041149 C1
- DE 29700253 U1
- DE 20206926 U1
- US 5521696 A
- US 2006060761 A1
- AT 405107 B
- US 20080239325 A1
- US 6172690 B1